# EUROPEAN PATENT APPLICATION

(11) **EP 1 251 488 A1**
(43) Date of publication of application: **23.10.2002**
(21) Application number: 00964638.1
(22) Date of filing: 04.10.2000
(51) Int. Cl.: G10K 15/02, G10L 19/00, G10H 1/00, H04M 3/42, H04Q 7/38, H04M 1/00

(54) **CONTENTS DATA DISTRIBUTING METHOD AND TELEPHONE TERMINAL DEVICE**

(30) Priority: 08.10.1999 JP 28799499
(71) Applicant: YAMAHA CORPORATION, Hamamatsu-shi, Shizuoka-ken 430-8650 (JP)
(72) Inventor: TANAKA, Takahiro c/o Yamaha Corporation, Hamamatsu-shi, Shizuoka 430-8650 (JP)
(74) Representative: Wagner, Karl H., Dipl.-Ing.
(86) International application number: JP0006896
(87) International publication number: WO01027913

(57) **Abstract**

A contents data distributing method performs a storing procedure, distribution procedure, receiving procedure and conversion procedure, in order to distribute contents data to portable terminals of various models connectable to a communication network from a distribution center via the communication network. The storing procedure converts contents data into a standardized distribution format for storing in a database in the distribution center. The distribution procedure reads selected contents data from the database for distribution to portable terminals via the communication network. The receiving procedure receives the distributed contents data at portable terminals. The conversion procedure converts the format of the received contents data from the standardized distribution format into a format specific to the model of a portable terminal to enable the reproduction of the contents data. Portable terminals can exchange messages with other terminals via the communication network, and, when a specific portable terminal receives a message from another terminal, reproduces the contents data and informs the arrival of the message.

## Description

### Technical Field

The present invention relates to a content data distribution method and a telephone terminal apparatus which are suitable for use in distributing content data by use of an automobile telephone system and a mobile telephone system.

### Background Art

With mobile telephone systems such as PDC (Personal Digital Cellular telecommunication system) known as an analog cellular system or a digital cellular system, and PHS (Personal Handyphone System), termination of a call at a telephone terminal apparatus carried by a user is notified to the user with a ringing tone. Conventionally, this ringing tone is generated in a certain narrow frequency band, sometimes making the ringing tone offensive to the ear. To solve this problem, it has recently been in practice to generate ringing tones in predetermined easy-to-the-ear melodic sounds. The ringing tones based on melodic sounds (hereafter referred to as ringing melodies) are preset in telephone terminals or may be created by users on their own desire. It is also in practice to distribute the music data for ringing melodies. Users can download the music data into their telephone terminals to sound desired ringing melodies.

Generally, conventional ringing melodies are monotone. Recently, attempts are being made for generating polytonal ringing melodies. For users to create polytonal ringing melodies, they must enter various music data by taking time with operating keys on their telephone terminals. These time and work may be saved by downloading polytonal ringing melodies from a center providing the service.

However, the telephone terminals being capable of sounding polyphonic ringing melodies have a melody reproducing circuitry configured to a certain degree of complexity, the configuration differing from model to model. Consequently, a problem occurs that some telephone terminal models can reproduce certain downloaded music data for ringing melodies while others cannot.

It is therefore an object of the present invention to provide a content distribution method and a telephone terminal apparatus for reproducing distributed content data regardless of the models of telephone terminal apparatuses used.

### Disclosure of Invention

In carrying out the invention and according to one aspect thereof, there is provided a content data distribution method for distributing, via a communication network, content data from a distribution apparatus to any of terminal apparatuses of various models which are connectable with the communication network, the content data distribution method executing a storage procedure, a distribution procedure, a reception procedure, and a conversion procedure. The storage procedure converts a format of content data into a standardized format and stores the resultant content data into a storage block of the distribution apparatus. The distribution procedure retrieves selected content data from the storage block and distributes the retrieved content data to any of the terminal apparatuses via the communication network. The reception procedure receives the distributed content at the terminal apparatus. The conversion procedure converts the standardized format of the received content data into a format unique to the model of the receiving terminal apparatus to make the content data reproducible in the receiving terminal apparatus.

Preferably, the above-mentioned storage procedure comprises a reproduction procedure for re-converting the distribution format of the content data into the format unique to the model of the receiving terminal apparatus for test reproduction; an edit procedure for editing the test-reproduced content data so as to optimize the reproduction state thereof; and a storage procedure for storing the edited content data into the storage block in the standardized distribution format.

The above-mentioned distribution procedure compresses content data representative of at least one of voice and music by use of one of MP3 and vector quantization and distributes the compressed content data to any of the terminal apparatuses.

Each of the above-mentioned terminal apparatuses has a tone generator for generating at least one of voice and tone by reproducing the content data representative of at least one of voice and tone. The above-mentioned conversion procedure converts the standardized distribution format of the received content into a format unique to the model of the tone generator of the terminal apparatus.

The content data distribution method further comprises: an evaluation procedure for test-reproducing, at the terminal apparatus, the content data with its format converted into a format unique to the model of the terminal apparatus and evaluating the reproduced state of the received content data.

The above-mentioned terminal apparatus has at least one of a talk capability and a communication capability and can exchange a message with another terminal apparatus via the communication network. Upon reception at the terminal apparatus of a message from another terminal apparatus, the terminal apparatus carries out a notification procedure for reproducing the content data to provide a notice of the termination of the message.

Preferably, upon reception of the message at the terminal apparatus, the above-mentioned notification procedure reproduces the content data representative of a melody, and sounds the melody for providing a notice of the termination of the message.

After receiving content data at the terminal apparatus, the above-mentioned content data distribution method further comprises a transmission procedure for transferring the content data with its format converted into a unique format to another terminal apparatus of the same model as that of the terminal apparatus via the communication network.

Further, the terminal apparatus according to the present invention capable of achieving the above-mentioned object comprises a reception block, a conversion block, and a reproduction block for reproducing, at the terminal apparatus, content data distributed thereto from a distribution apparatus via a communication network. The reception block receives, at the terminal apparatus, the content data with its format converted beforehand into a distribution format standardized at the distribution apparatus. The conversion block converts the format of the received content data from the standardized format into a format unique to the model of the terminal apparatus. The reproduction block processes the content data with its format converted into the unique format to reproduce the content data.

Preferably, the above-mentioned reception block operates after receiving content data representative of content constituted by at least one of voice and music compressed by one of MP3 and vector quantization at the distribution apparatus, for decompressing the compressed content data.

The above-mentioned reproduction block has a tone generator for processing content data representative of content constituted by at least one of voice and music tone to reproduce at least one of voice and tone. The above-mentioned conversion block converts the format of the received content data from the standardized distribution format into a format unique to the model of the tone generator of the reproduction block.

The above-mentioned reproduction block test-reproduces the content data with its format converted into the format unique to the model of the terminal apparatus to enable evaluating of the reproduced state of the received content data.

The terminal apparatus according to the invention further comprises a transmission block which cooperates with the reception block, having at least one of a talk capability and a communication capability for exchanging a message with another terminal apparatus via the communication network; and upon reception at the reception block of a message from the another terminal apparatus, a notification block for reproducing the content data to provide a notice of the termination of the message.

Preferably, upon reception of the message at the reception block, the above-mentioned notification block reproduces content data representative of a melody and sounds the melody to provide a notice of the termination of the message.

The above-mentioned transmission block is capable of transferring the content data with its format converted into the unique format to another terminal apparatus of the same model as that of the terminal apparatus via the communication network.

As described and according to the invention, in the distribution of content data, the format of the content data is converted by an apparatus which receives the distributed content data from the standardized general-purpose distribution format into a format unique to the model of the receiving apparatus, thereby allowing to reproduce the downloaded content independently of the model of the apparatus to which the content data have been downloaded. Consequently, a distribution center storing content data need not prepare content data of plural types of formats corresponding to models of apparatuses to which the content data are downloaded; namely, the distribution center may prepare the content data of only one type of standardized distribution format.

In storing content data, the content distribution data are edited so that the content data converted into the format unique to the model of a receiving apparatus can be reproduced and optimized to the reproduced state. Consequently, when content data such as music data are downloaded for reproduction, the content data can be reproduced as a ringing melody of high quality.

### Brief Description of Drawings

FIG. 1 schematically illustrates the outline of a content data distribution method associated with the present invention.
FIG. 2 illustrates in detail the conversion process of original data into distribution data and the checking process of whether the distribution data can be correctly reproduced in a telephone terminal apparatus in the content data distribution method shown in FIG. 1.
FIG. 3 illustrates the downloading process of distribution data from a database into a telephone terminal associated with the present invention as a ringing melody in the content data distribution method associated with the present invention.
FIG. 4 illustrates the data structure of entire distribution data standardized as a distribution format in the content data distribution method associated with the present invention.
FIG. 5 illustrates the data structure of a chunk in the distribution data standardized as a distribution format in the content data distribution method associated with the present invention.
FIG. 6 illustrates the data structure of sequence data in the distribution data standardized as a distribution format in the content data distribution method associated with the present invention.
FIG. 7 illustrates the data structure of sequence data in one example of a model-unique format in the content data distribution method associated with the present invention.
FIG. 8 is a block diagram illustrating an exemplary configuration of a telephone terminal apparatus associated with the present invention as embodied into a mobile telephone terminal.
FIG. 9 is a block diagram illustrating exemplary detail configurations of a music reproducing block and an audio processing block provided in the mobile telephone terminal apparatus shown in FIG. 8.
FIG. 10 schematically illustrates a configuration for downloading music data distributed from a distribution center into the telephone terminal apparatus associated with the present invention.
FIG. 11 is a flowchart describing call origination processing in the mobile telephone which is an example of the telephone terminal apparatus associated with the present invention.
FIG. 12 is a flowchart describing a format conversion process in the call origination processing of the mobile telephone which is the telephone terminal apparatus associated with the present invention.

### Best Mode for Carrying Out the Invention

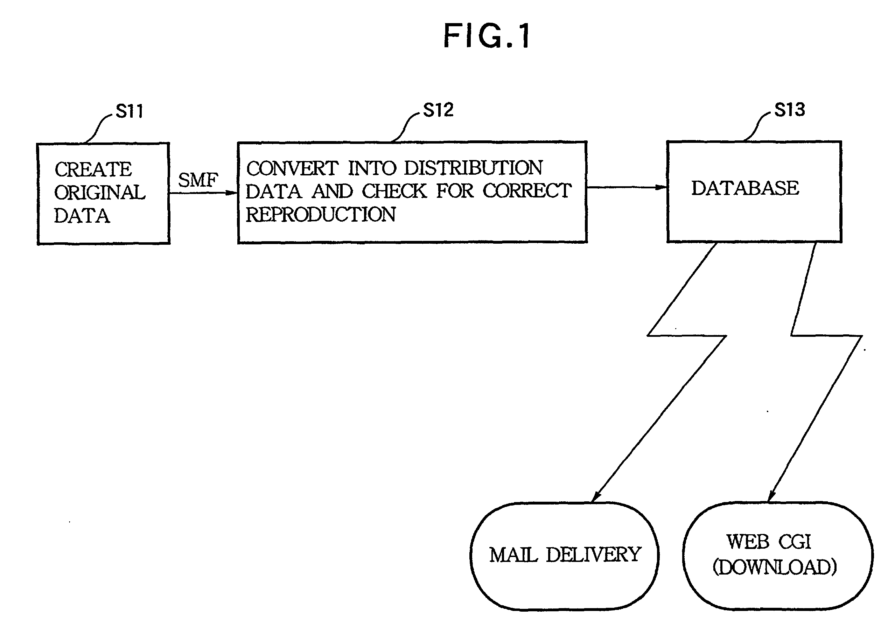

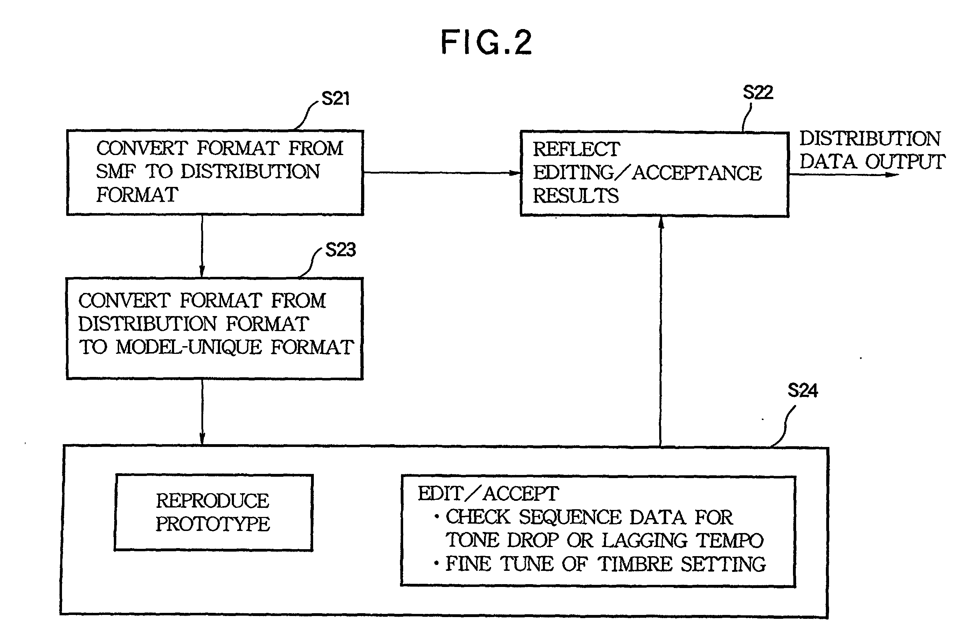

A content data distribution method according to the present invention is intended to distribute content data to a telephone terminal apparatus associated with the present invention. The following outlines this content data distribution method with reference to FIGS. 1 and 2. It should be noted that the following description uses an example in which content is ringing melodies, namely, content data are music data.

In the content data distribution method associated with the present invention, a format of distributing content data, or music data representing ringing melodies is a standardized distribution format to be described later. The content distribution data having this format are downloaded to the telephone terminal apparatus and stored therein. Consequently, in the content data distribution method associated with the present invention, when a call terminates at the telephone terminal apparatus, the downloaded content distribution data having the above-mentioned format are read to be converted into the content data having a model-unique format which allows the content data to be reproduced by a music reproducing means incorporated in the telephone terminal apparatus, thereby reproducing the content data as a ringing melody. It should be noted, however, that, if the telephone terminal apparatus concerned can reproduce the content data without converting their format, there is no need for executing format conversion for the content distribution data having the distribution format.

To be more specific, original music data which provide a ringing melody are created (step S11) as shown in FIG. 1. The original data are music data having SMF (Standard MIDI File) format for example. The original data are converted into the content distribution data having the standardized distribution format and, at the same time, it is checked that the content distribution data having the distribution format are correctly reproduced in the telephone terminal apparatus (step S12).

The content distribution data thus created are stored in a storage means to create a database (step S13). By distributing mail from this database or calling an extended capability called common gateway interface (CGI) provided on a server from this database, the database is accessed to download content. Namely, by accessing the server from the telephone terminal apparatus, the content distribution data having the distribution format can be downloaded from the database.

Referring to FIG. 2, there is shown the conversion of original data into content distribution data and the confirmation whether the music data can be correctly reproduced on the telephone terminal apparatus to be executed in step S12 shown in FIG. 1. First, format conversion from SMF format into a distribution format is executed (step S21). Next, the content distribution data of the resultant distribution format are re-converted into the content data of model-unique format. Then, the content data having model-unique format are reproduced by a music reproducing means (step S24). This music reproducing means is for models on which the content distribution data having distribution format cannot be reproduced as they are. The model-unique format is unique to this music reproducing means (namely, the music data having this format can be reproduced only by this music reproducing means. This reproduction is called prototype reproduction. In what follows, the model-unique format is called a specific tone generator format.

By listening to prototype reproduction, edit/acceptance inspection processing for checking whether the content data, which are music data, can be correctly reproduced or not (step S24). In the edit/acceptance inspection processing, the sequence data in the music data are checked and, if a tone drop or a lagging tempo is found, the sequence data are edited for optimization. In addition, timbre setting fine tuning is executed. The results of the edit/acceptance inspection processing of step S24 are reflected onto the content distribution data of distribution format obtained in step S21 (step S22), the resultant content distribution data being outputted as the final content distribution data. These content distribution data are stored in the storage means to provide a database as described above.

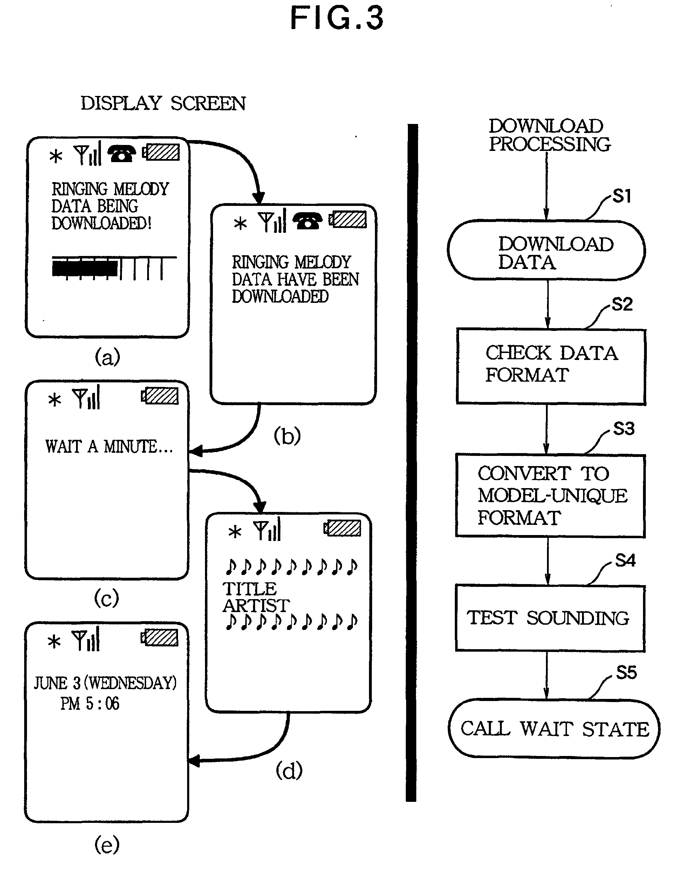

The following describes the downloading of the distribution data as a ringing melody from the above-mentioned database to the telephone terminal apparatus associated with the present invention with reference to FIG. 3.

FIGS. 3(a) through (e) on the left half of FIG. 3 show display screens which are shown on the display section of the mobile telephone practiced as one embodiment of the invention when downloading a ringing melody. On the right half of FIG. 3, the download processing to be executed in the download operation is shown. When the mobile telephone accesses the server of the distribution center and starts downloading desired content distribution data from the database of the distribution center equipped with a distribution device (step S1 of the download processing), the display screen shown in FIG. 3(a) appears, on which message "Ringing melody data being downloaded!" is shown, graphically indicating the downloading progression. When the content distribution data have been downloaded and stored, the display screen shown in FIG. 3(b) appears, on which message "Ringing melody has been successfully downloaded!" is shown. Consequently, if a call terminates at the mobile telephone with the downloaded content distribution data set as a ringing melody, the stored content distribution data are format-converted to be reproduced and outputted as a the ringing melody.

Next, the display screen shown in FIG. 3(C) is displayed with message "Wait a while..." At this moment, the data format check processing of step S2 is executed and, at the same time, the conversion into the specific tone generator format unique to the device shown in step S3 is executed. This specific tone generator format can be reproduced only by the music reproducing means built in this telephone terminal apparatus. Then, test sounding is executed (step S4), which need not be always executed. If the test sounding is not executed, the format conversion processing is not executed either. If the test sounding is executed, the display screen during the test sounding is displayed as shown in FIG. 3(d), in which the music title of the reproduced music data and its artist are shown between lines of musical notes. Then, the mobile telephone enters the a wait state, which is the initial state of the mobile telephone (step S5). In the wait state, the display screen shown in FIG. 3(e) appears, displaying the current date and time.

As described, the content data distribution method associated with the present invention executes the storage procedure, the distribution procedure, the receiving procedure, and the conversion procedure to distribute content data from the distribution device of the distribution center to terminal apparatuses of various models communicable with a communication network. The storage procedure includes step S13 in which content data are converted into the standardized distribution format, the resultant data being stored in the database constituting the storage block of the distribution device. The distribution procedure retrieves the selected content data from the database and distributes the retrieved data to the terminal apparatus via the communication network. The receiving procedure includes downloading step S1 and receives the distributed content data at the terminal apparatus. The conversion procedure includes step S3 in which the format of the received content data is converted into the format unique to the model of the terminal apparatus, thereby making the received content data reproducible. The above-mentioned storage procedure consists of step S23 in which test reproduction (prototype reproduction) is executed by re-converting the format of the content data converted into the distribution format into the format unique to the model of the receiving terminal apparatus, steps S24 in which the test-reproduced content data are edited so as to optimize their reproduced state, and step S22 in which the edited content data are stored in the storage block in the standardized distribution format. The above-mentioned distribution procedure compresses content data representative of voice or tone for example by MP3 or vector quantization for example and distributes the compressed content data to the terminal apparatus. The terminal apparatus has a tone generator which reproduces the content data representative of voice or tone to sound voice or tone. The conversion procedure converts the standardized distribution format of the received content data into the format unique to the model of the tone generator of the terminal apparatus. The content data distribution method according to the present invention includes step S4 in which the content data with its format converted into the format unique to the model of the tone generator of the terminal apparatus are test-reproduced at the terminal apparatus to evaluate the reproduced state of the received content data. The terminal apparatus is constituted by a mobile telephone terminal for example having a talk capability or a communication capability for exchanging messages with other terminal apparatuses via a communication network. This terminal apparatus includes a notification procedure for sending a notice of the termination of a message received from another terminal apparatus by reproducing the content data. In this case, when this terminal apparatus has received a message, the notification procedure reproduces the content data representative of a melody to sound a melody tone, thereby sending a notice of the termination of this message. In addition, receiving content data, the terminal apparatus can forward the received content data with its format converted into model-unique format to another terminal apparatus of the same model as that of this terminal apparatus by means of its communication capability via a communication network.

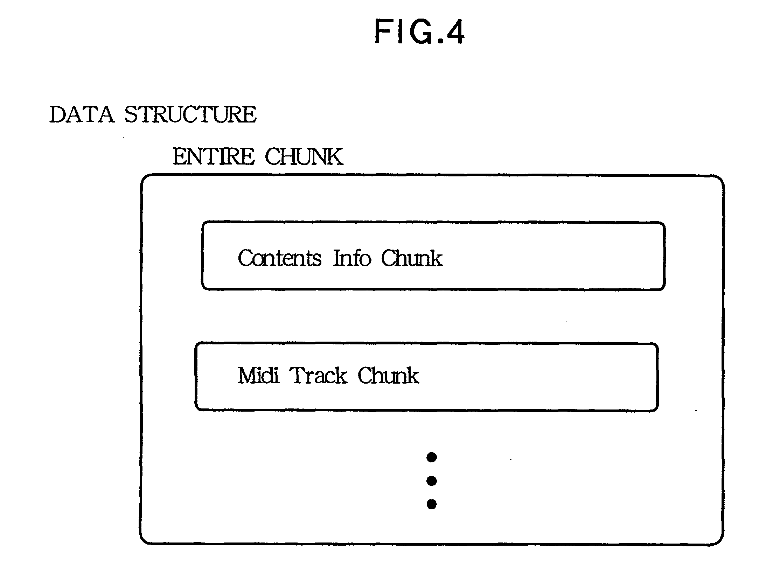

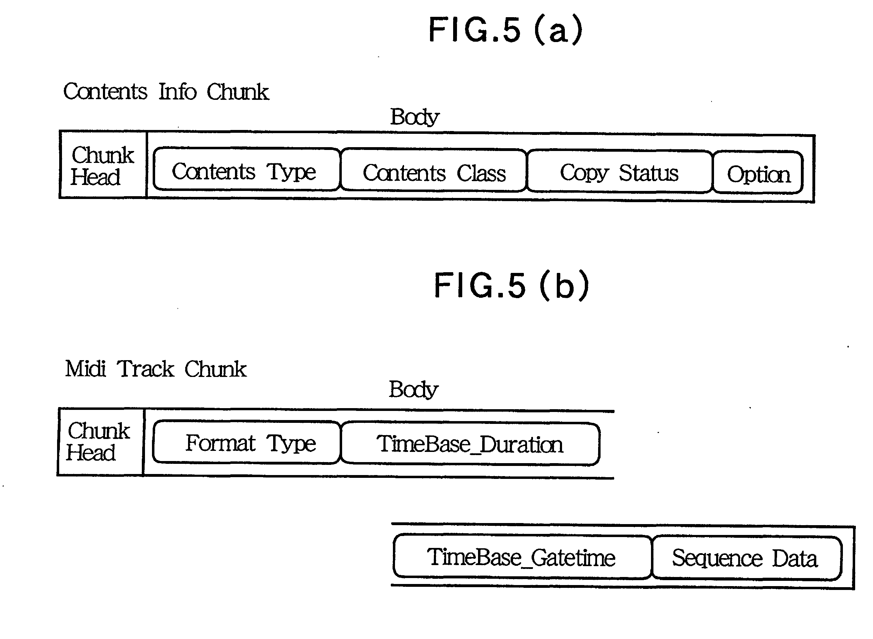

The following describes the data structure of content distribution data standardized as a distribution format with reference to FIGS. 4 through 6. FIG. 4 illustrates the entire data structure of content distribution data which has a chunk structure consisting of a plurality of chunks. The entire chunk includes at least a contents info chunk and one track data chunk. In the example shown in FIG. 4, content is a ringing melody, so that MIDI track chunk is track data chunk. The chunk ID of the entire chunk is "WPMD." As shown in FIG. 5(a), contents info chunk consists of a chunk head and a body in which content data are stored. The chunk head consists of a chunk ID indicative of chunk type and a body size indicative of the size of the body. The chunk ID of contents info chunk is "CNT1." The body consists of data such as contents type, contents class, copy status, and option.

The contents type is indicative of the type of content, the type including data for mobile terminals and other data. Content class is indicative of the class of content, the class including ringing melody, karaoke, CM, and others. Copy status is indicative of the copy definition of content, defining whether the content data are copy-protected or copy-free. Option stores data such as music's vendor name, carrier name, category name, title, artist name, writer/composer/adapter name, and copyright information. Content type, class, and copy definition are basically the data for display. However, the data of option are not necessarily used for display; they are mainly used for the recognition of individual data.

The MIDI track chunk, which is a track data chunk, consists of a chunk head and a body for storing data as shown in FIG. 5(b), the chunk head consisting of chunk ID indicative of the type of chunk and body size indicative of the size of body. The chunk ID of the MIDI track chunk is "MTR." The body includes data such as format type, timebase duration, timebase gatetime, and sequence data. Format type defines the real format of MIDI track chunk. In this example, the format type includes a type for the handyphone standardized as a distribution format and a model for specific tone generator, which is a model-unique format for example. It should be noted that an extended type may also be defined as required. For example, a type representative of the enhancement of the CPU used in the telephone terminal apparatus. Timebase duration is indicative of a time duration between one event and another. Timebase gatetime is indicative of the reference time of a gatetime indicative of sounding time length. Sequence data are indicative of real play data, which are mandatory for MIDI track chunk.

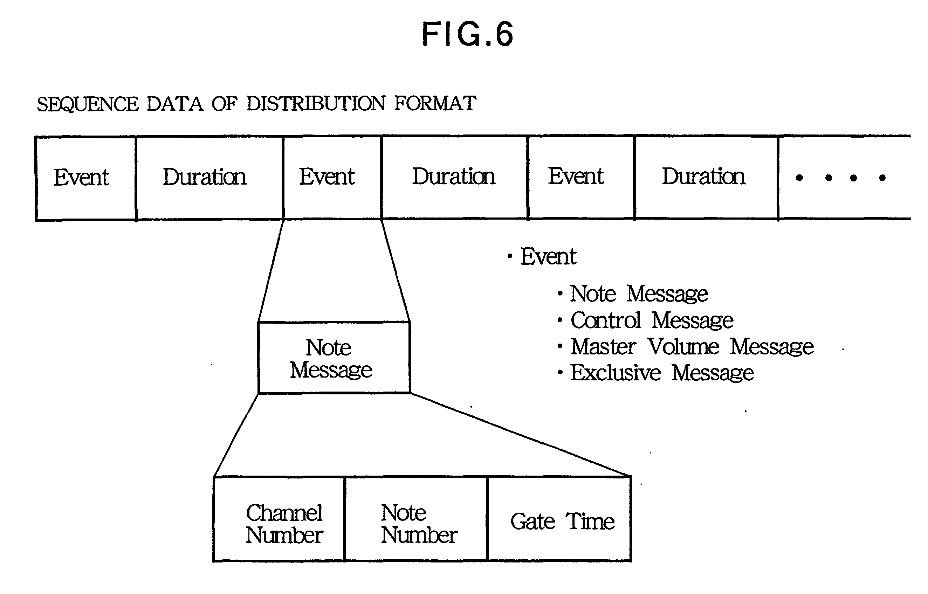

FIG. 6 shows the data structure of the sequence data in the MIDI track chunk of the standardized distribution format. As shown, the sequence data of the standardized distribution format consists of a sequence of event data and duration data. In this example, the duration are placed between event data and event data. Each event data consist of message data which include note message, control message, master volume message, and exclusive message. The duration data are indicative of a time duration between one event and another. The reference time of duration data is the above-mentioned timebase duration. Further, the note message in the message data consists of channel number indicative of a sounding channel, note number indicative of sounding pitch, and gatetime indicative of sounding length of time. The reference time of this gatetime is the above-mentioned timebase gatetime. The control message consists of data such as volume, pitch bend, panning value control data, and timbre number for specifying the timbre of each channel. The master volume message is indicative of data for controlling the volume of the entire sounding channels. The exclusive message is indicative of setting information and which are not specified as common standards. It should be noted that, in the telephone terminal apparatus according to the present invention, the number of channels which can be simultaneously sounded is four for example.

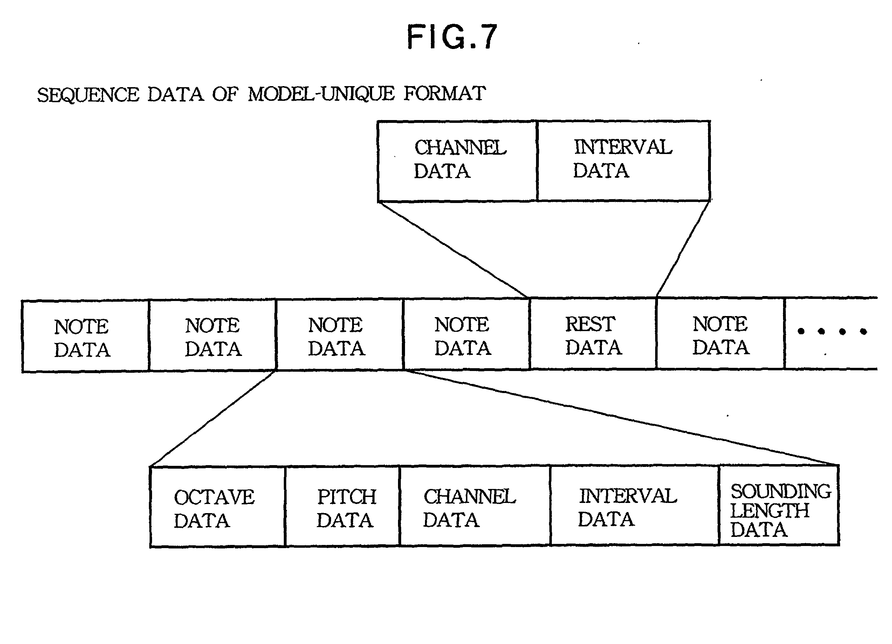

The following describes one example of the data structure of a tone generator specific format, which is a model-unique format obtained by the format conversion in the telephone terminal apparatus according to the present invention. The data structures of the data other than sequence data are substantially the same as that of the distribution format, so that the following description will be made by use of the data structure of sequence data shown in FIG. 7 for example which is a tone generator specific format. In this example of the sequence data having the tone generator specific format, the sequence data consist of a sequence of note data and rest data. The note data consist of octave data and pitch data indicative of pitch, channel data indicative of sounding channel, interval data indicative of the time length up to the note data or rest data to be processed next, and sounding length data indicative of the length of time of sounding. The rest data consist of channel data indicative of concerned channel and interval data indicative of the length of time up to the note data or rest data to be processed next.

The tone generator specific format shown in FIG. 7 is the format of a model on which the sequence data consisting of note data and rest data are reproduced by the music reproducing means. The downloaded sequence data of the distribution format shown in FIG. 6 are converted into the sequence data of the tone generator specific format shown in FIG. 7.

In the format conversion, the note message indicative of note-on is extracted from the sequence data of the distribution format. Next, the duration data between messages in the sequence data of the distribution format are converted into the duration data indicative of the time length between note messages. The converted duration data are equivalent to the length of time from one note-on to the next note-on. If another message exists between note messages, the duration data of these messages are totaled to be converted into the duration data indicative of the length of time between the note messages. Next, the note number in the distribution format is converted into 2-bit octave data and 4-bit pitch data of the tone generator specific format. Further, the gatetime data in the note message are converted into the sounding length data of the tone generator specific format with the timebase gatetime data in the body of the MIDI track chunk used as the reference time. The converted duration data are in turn converted into the interval data in the note data of the tone generator specific format with the timebase duration data in the body of the MIDI track chunk used as the reference time. In addition, the channel number is replaced with the channel data, the format conversion being executed from the sequence data of distribution format into the sequence data of tone generator specific format.

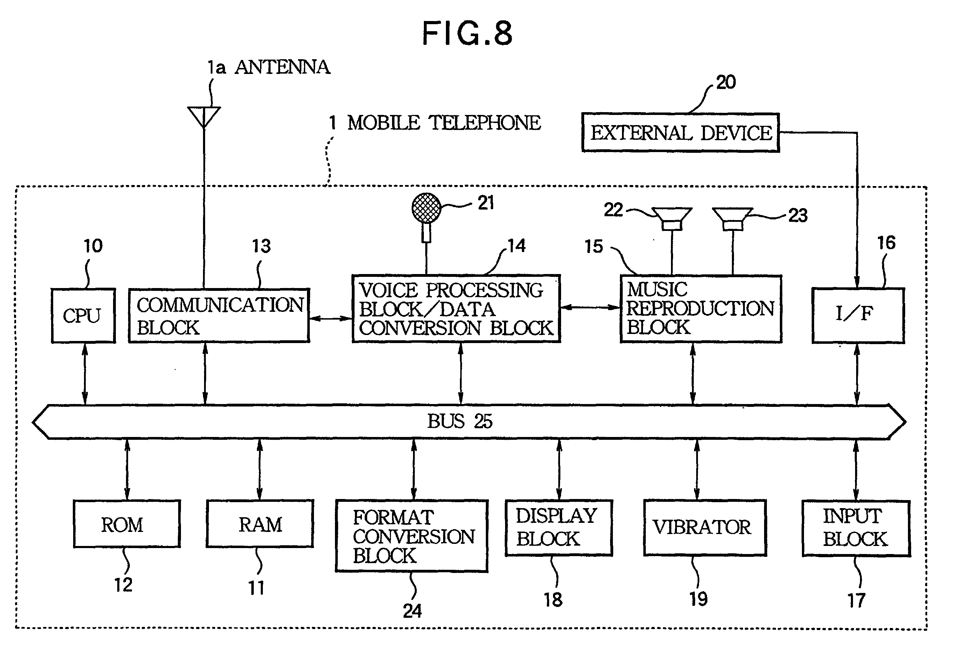

The following describes an exemplary configuration of the telephone terminal apparatus according to the invention as embodied in a mobile telephone with reference to FIG. 8. Referring to FIG. 8, a mobile telephone 1 has an antenna 1a which is generally retractable, the antenna 1a being connected to a communication block 13 having modulation and demodulation capabilities. A central processing unit (CPU) 10 is a system controller which controls each functional block of the mobile telephone 1 as instructed by telephone capability programs, the CPU 10 having a timer for indicating an elapsed time at operation and generating a timer interrupt at specific time intervals. A RAM (Random Access Memory) 11 has a storage area for storing content distribution data downloaded from a distribution center arranged on a public switched line network for example and data downloaded from an external device 20, a user settings data storage area, and a work area for use by the CPU 10. A ROM (Read Only Memory) 12 stores various telephone capability programs for transmission and reception to be executed by the CPU 10, programs for supporting music reproduction processing, and various data such as preset music data.

The communication block 13 demodulates a signal received at the antenna 1a and, at the same time, modulates a signal to be transmitted to transmit the modulated signal from the antenna 1a. The receive signal demodulated by the communication block 13 is decoded by a voice processing block/data conversion block 14. A voice signal for transmission inputted from a microphone 21 is compressed by the voice processing block/audio conversion block 14. A music reproduction block 15 sounds, from a reception speaker 22, the reception signal received from the voice processing block/data conversion block 14 and, at the same time, reproduces music data at the termination of a call, sounding the reproduced music data as a ringing melody from a termination speaker 23. These music data may be either music data initially stored in the ROM or music data, or content distribution data downloaded into the mobile telephone 1 and stored in the RAM 11.

It should be noted that, when reproducing the content distribution data stored in the RAM 11 as a ringing melody at the termination of a call, the distribution format of the content data read from the RAM 11 is converted by a format conversion block 24 into a format unique to the tone generator and the converted content distribution data are supplied to the music reproduction block 15. The conversion processing by the format conversion block 24 may alternatively be executed by the CPU 10 as instructed by a conversion program stored in the ROM 12. In this case, in order to reproduce at the terminal apparatus the content data distributed thereto from the distribution apparatus via the communication network, a recording medium storing the program to be executed by the CPU 10 built in the terminal apparatus is used. This recording medium is a floppy disk or a CD-ROM for example which stores the program for executing a reception procedure for receiving the content data with its format converted beforehand into a distribution format standardized at the distribution apparatus, a conversion procedure for converting the format of the received content data from a standardized distribution format into a format unique to the model of the terminal apparatus, and a reproduction procedure for processing the content data having the unique format to reproduce the content data.

If a free area of a predetermined size occurs in an internal storage means in which music data are stored when the music reproduction block 15 is reproducing the music data, the music reproduction block 15 sends a transfer request signal (Req) to the CPU 10. Receiving this signal, the CPU 10 retrieves the rest of the music data from the ROM 12 and transfers the retrieved music data to the music reproduction block 15. An interface (I/F) 16 is used to download music data for example from an external device 20 such as a personal computer for example. An input block 17 is input means based on numeric keys "0" through "9" and code keys and a jog dial for example disposed on the mobile telephone 1. A display block 18 displays a telephone functionality menu and information about the operation of the numeric keys and the jog dial for example. A vibrator 19 vibrates the main body of the mobile telephone 1 instead of sounding the ringing tone at the termination of a call, giving a notice thereof to the user. It should be noted that the above-mentioned component of the mobile telephone 1 are interconnected with a bus 25.

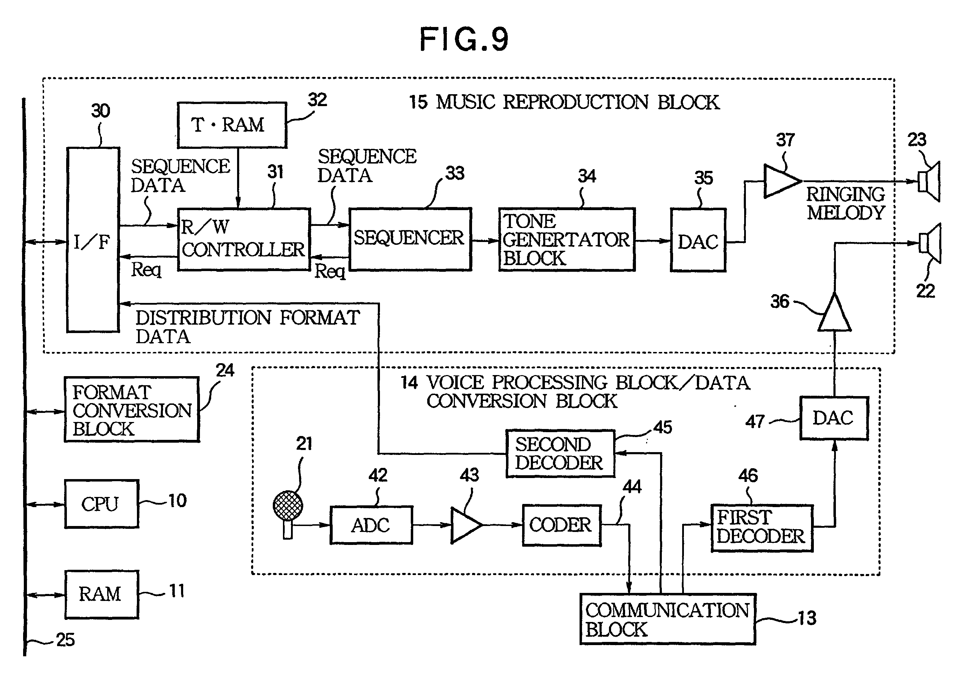

The following describes, with reference to FIG. 9, the detailed exemplary configurations of the music reproduction block 15 and the voice processing block/data conversion block 14 in the mobile telephone 1 shown in FIG. 8. First, the music reproduction block 15 will be described. In the music reproduction block 15 shown, an interface (I/F) 30 transfers various data via the bus 25. AT the initial setting of music data, sequence data of predetermined size is stored in a free area of a temporary storage block (TRAM) under the control of a read/write controller (R/W controller) 31. When music reproductions starts, the R/W controller 31 sequentially reads the sequence data from the temporary storage block (TRAM) in response to a read request signal (Req) given by a sequencer 33 and supplies the sequence data to the sequencer 33. The storage size of the temporary storage block (TRAM) 32 is smaller than a storage size necessary for storing the sequence data for one piece of music; for example, the TRAM 32 can store the music data for only 32 words. The sequencer 33 sequentially receives sequence data, interprets the received sequence data, and sets tone generator parameters corresponding to the sequence data to a tone generator block 34 so as to sound the music data with that sounding timing. The tone generator parameters include pitch data, note-on and note-off signals, and so on.

The tone generator block 34, which can sound 4-parts tone signals for example at the same time, generates, for each part, tone signals based on the tone generator parameters set by the sequencer 33. The generated 4-part tone signals are supplied to a digital-to-analog converter (DAC) 35 at predetermined time intervals to be converted into analog tone signals.

If, as the reading of the sequence data from the temporary storage block (TRAM) 32 goes on, a free area of a predetermined size occurs in the temporary storage block (TRAM) 32, the R/W controller 31 sends a transfer request signal (Req) to the bus 25 via the interface 30. This transfer request signal (Req) is received by the CPU 10. The following sequence data, for example the sequence data for 16 words, are read from the RAM 11 for example to be sent to the bus 25. These sequence data are written to the free area in the temporary storage block (TRAM) 32 under the control of the R/W controller 31 via the interface 30. By repeating these operations, the entire music data can be reproduced even if the size of the temporary storage block (TRAM) 32 is smaller than necessary for storing the sequence data for one whole piece of music.

If the reproduced tone signal is set so as to be sounded as a ringing melody, the output of the DAC 35 is amplified by an amplifier 37 and the amplified signal is sounded from a termination speaker 23 as a ringing melody.

The following describes the voice processing block/data conversion block 14. In the voice processing block/data conversion block 14 shown in FIG. 9, a transmission voice signal inputted from the microphone 21 is converted by an analog-to-digital converter (ADC) 42 into a digital signal, which is supplied to a coder 44 through an amplifier 43. The coder 44 is a CELP (Code Excited LPC) coder for example. The digital signal is highly efficiently compressed by the coder 44. The compressed signal is then supplied to the communication block 13 for transmission from the antenna 1a. A reception signal demodulated by the communication block 13, which is highly efficiently coded reception data, is decoded by a first decoder 46, the decoded reception data are converted by a digital-to-analog converter (DAC) 47 into an analog reception signal, which is supplied to the music reproduction block 15 for sounding from the reception speaker 22 through an amplifier 36.

Further, when the content distribution data downloaded from the distribution center are demodulated by the communication block 13, the demodulated compressed content distribution data are decoded by a second decoder 45 into the content distribution data of the original distribution format. The content distribution data of the original distribution format are stored in the RAM 11 via the interface 30. If the content is a ringing melody, these content distribution data provide the music data for the ringing melody. It should be noted that the content distribution data are distributed as compressed by MP3 (MPEG layer III) or vector quantization for example. The second decoder 45 decompresses the content distribution data thus compressed.

The following describes the operation of reproducing music data in the music reproduction block 15 and the voice processing block/data conversion block 14 shown in FIG. 9. Music data are reproduced as a ringing melody when a call terminates at the mobile telephone 1, in which the reproduction starts after music data are initialized. In the following description, the music data selected for reproduction as a ringing melody are the content distribution data downloaded into the RAM 11.

In the mobile telephone 1 shown in FIG. 1, predetermined music data in the content distribution data downloaded into the RAM 11 are read therefrom, the music data are supplied to the format conversion block 24 via the bus 25, and the format of the music data are converted into a format unique to the tone generator. In this formation conversion, the format of the sequence data is converted; at the same time, "format type" is converted from "Handy Phone Standard" into the tone-generator-unique format. The sequence data in the format-converted content distribution data are sent to the music reproduction block 15. These sequence data consist of a sequence of note data and rest data as shown in FIG. 7.

The sequence data captured through the interface 30 are stored by the R/W controller 31 into the temporary storage block (TRAM) 32. In this example, the music data for the first 32 words from the beginning of the sequence data are stored in the temporary storage block (TRAM) 32. Then, in response to a read request signal (Req), the R/W controller 31 sequentially reads the note data and the rest data from the temporary storage block (TRAM) 32. One word of the tone data consists of octave data indicative of a pitch to be sounded, tone interval data, channel data indicative of sounding channel, interval data indicative of the time length up to the note data or rest data to be processed next, and sounding length data indicative of the length of time of sounding as described before. One word of the rest data consists of rest data indicative of rest type, channel data to which the rest data belong, and interval data, which are a time length up to the next tone or rest.

When the sequencer 33 reproduces a tone, the tone data sequentially read from the temporary storage block (TRAM) 32 are interpreted and the tone generator parameters corresponding to the note data are set to the tone generator block 34 so as to be sounded with that timing. Thus, the tone corresponding to the sequential tone data is generated by the tone generator block 34 for sounding.

As the sequence data are read from the temporary storage block (TRAM) 32 and the music data are reproduced, a free area occurs in the temporary storage block (TRAM) 32 for the size of the read sequence data. Because only the first 32 words of the music data are written to the temporary storage block (TRAM) 32, writing the following sequence data to the free area can reproduce one whole piece of music data by repeatedly and sequentially writing the following sequence data to the temporary storage block (TRAM) 32 even if the size of the sequence data is greater than the size of the temporary storage block (TRAM) 32.

To be more specific, a transfer request signal (Req) to be outputted from the R/W controller 31 is generated when the free area for the predetermined number of words occurs in the temporary storage block (TRAM) 32 and writes the following sequence data to the temporary storage block (TRAM) 32. Receiving this transfer request signal (Req), the CPU 10 reads the following music data in a size equivalent to the free area from the RAM 11, the music data are format-converted by the format conversion block 24, and the format-converted music data are sent to the music reproduction block 15. Receiving these sequence data, the R/W controller 31 of the music reproduction block 15 stores the free area of the temporary storage block (TRAM) 32.

In this example, the free area for generating the transfer request signal (Req) may be set to a desired size. If the size of the free area is set to the number of words in the proximity of 0, the transfer request signal (Req) is generated more frequently and therefore the number of write words decreases, in turn decreasing the processing load of the CPU 10. On the other hand, if the size of the free area is set the number of words in the proximity of 32, the transfer request signal (Req) is generated less frequently and therefore the number of write words increases, in turn increasing the processing load of the CPU 10. Consequently, the size of the free area which generates the transfer request signal (Req) should be set in accordance with the processing speed of the CPU 10.

It should be noted that the sequencer 33 interprets the note data and sets the tone generator parameters consisting of pitch data, not-on signal, and part specification information to the tone generator block 34 so as to reproduce the music data with that reproduction timing. The tone generator block 34 generates a tone on the basis of these tone generator parameters set to its tone generator register. When the sounding length of these tone data has passed, the sequencer 33 sets a note-off signal to the tone generator block 34 to note off that tone. Thus, the tone generator block 34 executes the muting of the tone. The above-mentioned processing is executed every time the sequence data are read from the temporary storage block (TRAM) 32, the tone signal reproduced by the tone generator block 34 being outputted to the DAC 35.

If the setting is made so as to cause the music reproduction block 15 to output a ringing melody upon termination of call at the mobile telephone 1, the above-mentioned music reproduction processing starts upon termination of a call. A tone reproduced by the music reproduction block 15 is sounded from the termination speaker 23 as a ringing melody. It should be noted that the music to be reproduced as a ringing melody may be selected from various pieces of music, which are the content distribution data downloaded into the RAM 11 or various pieces of music stored in the ROM 12 beforehand.

In the above description, when reproducing, by the music reproduction block 15, the content distribution data downloaded into the RAM 11, the format of the content distribution data read from the RAM 11 are converted by the format conversion block 24 to the format unique to the tone generator and then the resultant sequence data are stored in the temporary storage block (TRAM) 32. It will be apparent that the present invention is not limited to this scheme. For example, the distribution format of the content distribution data may be converted by the format conversion block 24 into the tone-generator-unique format beforehand and the resultant content data may be stored in another area in the RAM 11. In this case, the sequence data contained in the content data having the tone-generator-unique format are read from the RAM 11 and sent to the music reproduction block 15. It should be noted that both the content distribution data having the distribution format and the content having the tone-generator-unique format are stored in the RAM 11, but the content distribution data having the distribution format may be deleted from the RAM 11 when the content data having the tone-generator-unique format are stored into the RAM 11.

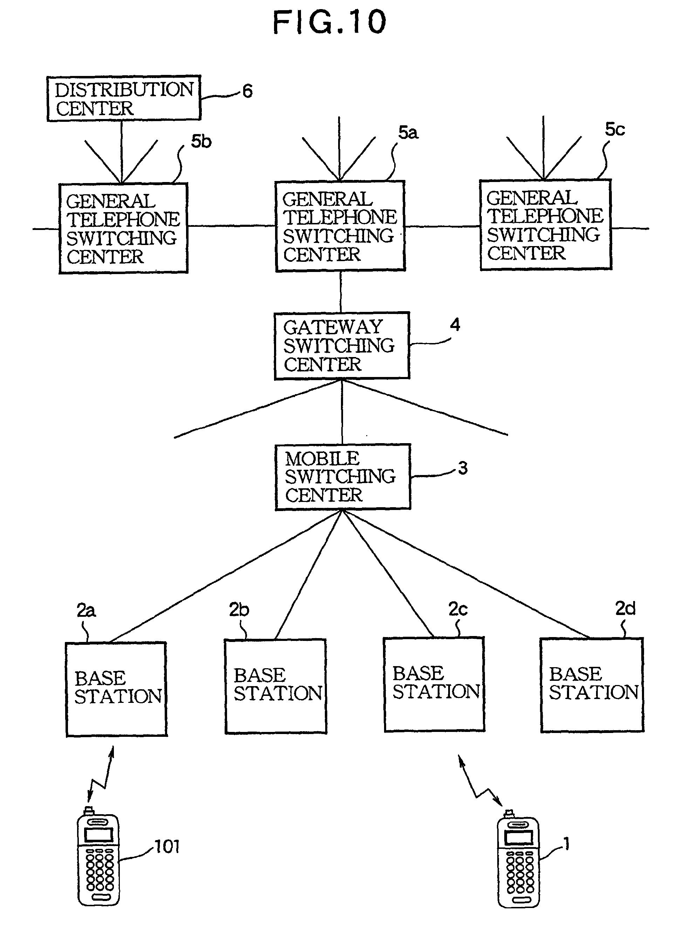

As described, music data, which are content distribution data supplied from the distribution center, may be downloaded into the telephone terminal apparatus associated with the present invention. FIG. 10 is a schematic diagram illustrating an exemplary operation of downloading content distribution data which are distributed to the mobile telephone 1 and a mobile telephone 101 when the telephone terminal apparatus according to the present invention is applied to these mobile telephones 1 and 101 which are the same in configuration.

Generally, the cellular system in mobile telephony is based on small zone scheme, in which many wireless zones are arranged in a service area. Each of these wireless zones is managed by its base station. When a mobile telephone, which is a mobile station, communicates with a plain telephone, the mobile telephone is connected to a mobile switching center through the base station of the wireless zone to which this mobile telephone belongs and then connected to a general telephone network. Thus, through connection with the base station managing each wireless zone via a wireless circuit, the mobile telephone can communicate with another telephone. When communicating with a mobile telephone which belongs to another wireless zone, the mobile telephone concerned is connected to the mate mobile telephone via the base station managing the wireless zone to which the mobile telephone concerned belongs, the mobile switching center, and the base station managing the wireless zone to which the mate mobile telephone belongs.

One example of such a cellular system is shown in FIG. 10. As shown, the mobile telephone 1 belongs the wireless zone managed by a base station 2c and the mobile telephone 101 belongs to the wireless zone managed by a base station 2a. The mobile telephones 1 and 101 are connected to the base stations 2c and 2a respectively via wireless circuits. Uplink signals for use in talk or location registration are received by the base stations 2c and 2a for processing. Each of the base stations 2a through 2d manages a different wireless zone. Each wireless zone may overlap another in periphery. The base stations 2a through 2d are connected to a mobile switching center 3 by duplex lines. Two or more mobile switching centers 3 are concentrated at a gateway switching center 4 to be connected to a general telephone switching center 5a. Although not shown, two or more gateway switching centers 4 are interconnected by repeater transmission line. Each of the general telephone switching centers 5a, 5b, 5c, ... is arranged in each area. The general telephone switching centers 5a, 5b, 5c, ... are also interconnected by repeater transmission line. Many plain telephones are connected to each of the general telephone switching centers 5a, 5b, 5c, ... For example, a distribution center 6 is connected to the general telephone switching center 5b.

The distribution center 6 is added with new pieces of music from time to time and therefore stores a large amount of content distribution data having distribution format. In the present invention, the content distribution data having distribution format can be downloaded from the distribution center 6 connected to the general telephone network into the mobile telephones 1 and 101 for example as required. When downloading the content distribution data having distribution format into the mobile telephone 1, the mobile telephone 1 dials the telephone number of the distribution center 6. Consequently, the mobile telephone 1 is connected to the distribution center 6 in a path of the mobile telephone 1, the base station 2c, the mobile switching center 4, the gateway switching center 4, the general telephone network 5a, the general telephone network 5b, and the distribution center 6 in this order. Then, operating the numeric keys and the jog dial for example by following a guidance shown on the display block 18 allows the mobile telephone 1 to download the content distribution data of desired music. The downloaded content distribution data are stored in the RAM 11 in the mobile telephone 1. Generally the same operation as above is executed when downloading music data, which are content distribution data, from the distribution center 6 into the mobile telephone 101.

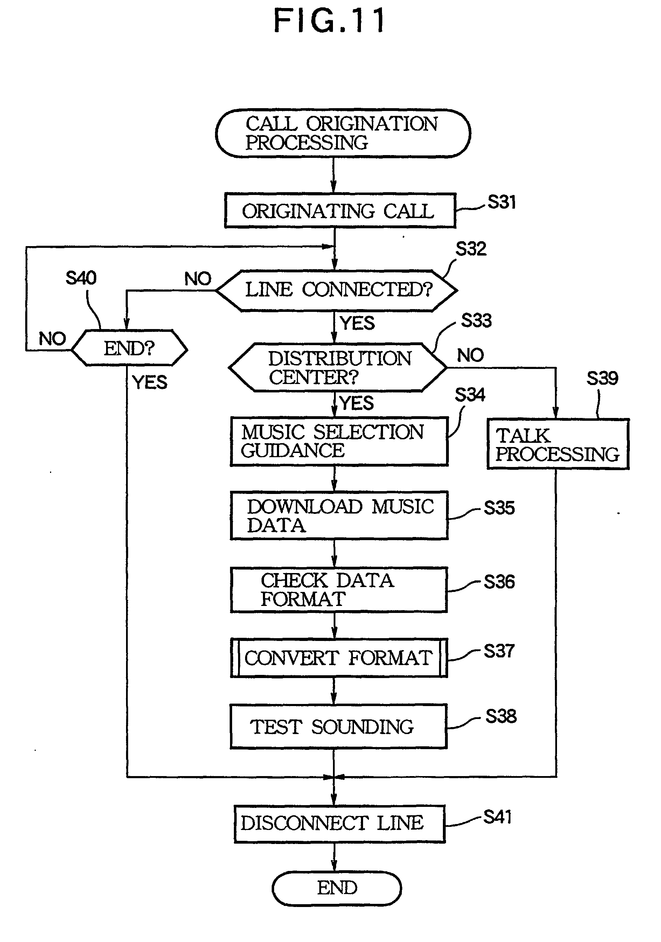

The following describes call origination processing to be executed by the CPU 10 of the mobile telephone 1 (101) associated with the present invention, with reference to the flowchart shown in FIG. 11.

When the telephone number of the other party is set by operating the numeric keys for example of the input block 17 while reading the telephone number from the display block 18 and a call button is pressed (step S31), the telephone number of the called party is stored in the RAM 11 and, at the same time, an origination signal attached with the telephone number information of the calling mobile telephone is transmitted from the communication block 13 via the antenna 1a. This origination signal is received by the base station 2c (2a) and transferred to the mobile switching center 3. The mobile switching center 3 determines, from the telephone number of the called party, the general telephone switching center and the base station for connection with the called party and sends the origination signal over the determined path. Consequently, the origination signal terminates at the called telephone, thereby sounding a ringing tone from the called telephone. Step S32 determines whether the termination processing of the called telephone has been executed (namely, the called telephone has been hooked off) and the line is connected. If the called telephone is found not hooked off, then, in step S40, it is determined whether call end processing has been executed. If call end processing is found not executed, then, back in step S32, it is determined whether the line has been connected. Therefore, unless call end processing has been executed, steps S32 and S40 are repeated until the line is connected.

When the called telephone has been hooked off and the line is connected, the decision in step S32 is Yes. Then, is step S33, it is determined whether the called party is the distribution center. If the called party is found the distribution center, then, in step S34, a music selection guidance is displayed onto the display block 18 from the distribution center. By following the displayed music selection guidance, a desired piece of music is selected from a singer list or a genre list. Next, in step S35, the content distribution data of the selected music are distributed from the content distribution center and stored in the RAM 11. These content distribution data has the standardized distribution formation shown in FIGS. 4 through 6. In step S36, it is checked whether the data format of these content distribution data is the standardized distribution format. In step S37, the distribution format of the content distribution data is converted by the format converter 45 into a format unique to the model of the tone generator. The content data after this format conversion may be stored in the RAM 11.

The sequence data contained in the content data having the tone-generator-unique format has the data structure shown in FIG. 7 for example. Namely, the sequence data having event data and duration data are converted into the sequence data having tone data and rest data. In step S38, the format-converted content data may be supplied to the music reproduction block 15 for test sounding, thereby checking if these format-converted content data can be correctly reproduced. When the above-mentioned processing operations have been completed, the line is disconnected in step S41, upon which the call origination processing comes to an end. If the called party is found not the distribution center in step S33, then talk processing for talking with the called party is executed in step S39. When the talk is over, the line is disconnected in step S41, upon which the call origination processing comes to an end. If the talk processing is found ended in step S40, the line is also disconnected in step S41, upon which the call origination processing comes to an end.

It should be noted that the format conversion processing (step S37) and the test sounding processing (step S38) may not be executed along with the call origination processing; alternatively, the format conversion processing (step S37) may be executed upon the termination of a call, thereby supplying the format-converted sequence data to the music reproduction block 15.

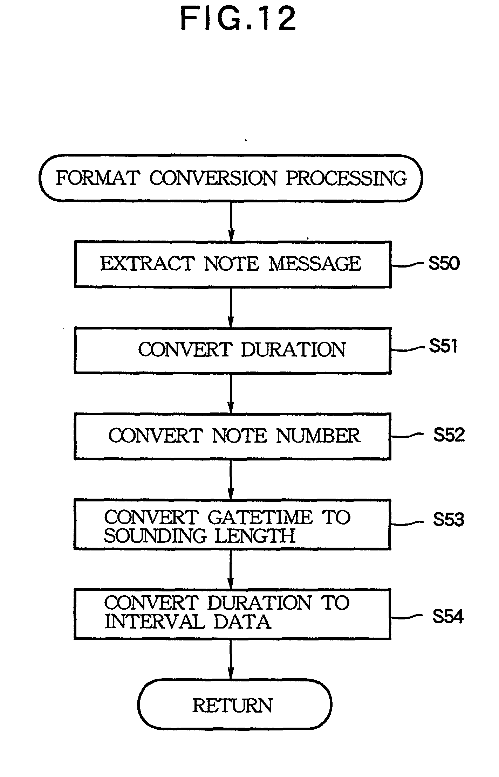

The following describes the format conversion processing with reference to the flowchart shown in FIG. 12. In the following description, this format conversion processing is for converting the sequence data having the distribution format shown in FIG. 6 into the sequence data having the tone-generator-unique format shown in FIG. 7.

When the format conversion processing starts, a note message denoting a note-on event is extracted from the sequence data having the distribution format in step S50. The note message consists of channel number indicative of the channel for sounding, note number indicative of the pitch for sounding, and a gatetime indicative of the length of sounding. These data are extracted.

In step S51, the duration data between messages of the sequence data of the distribution format is converted into the duration data indicative of a time length between note messages. The converted duration data is equivalent to a duration from a note-on event to the next note-on event. Because there are various message types such as note message, control message, master volume message, and exclusive message and duration data are inserted between these messages, the duration data are converted as follows. For example, if the sequence data consist of note message 1, duration 1, control message 1, duration 2, exclusive message, duration 3, note message 2, and duration 4 in this order, the duration data indicative of a time length from note message 1 to note message 2 are obtained by adding duration 1, duration 2, and duration 3 together. Step S51 converts such duration data.

Because the note number in the distribution format is not defined by octave and tone interval, the note number in the distribution format is converted into the 2-bit octave data and 4-bit tone interval data of the tone-generator-unique format in step S52. Further, in step S53, the gatetime data in the note message are converted into the sounding length data of the tone-generator-unique format with the timebase gatetime in the body of the MIDI track chunk used as a reference time. In step S54, the duration data converted in step S51 are converted into the interval data in the note data of the tone-generator-unique format with the timebase duration data in the body of the MIDI track channel used as a time reference. In this case, instead of reflecting the duration data converted in step S51 onto the interval data in the note data, the duration data converted in step S51 may be reflected onto the interval data of the rest data. Further, the channel number is replaced with channel data and, when the processing of step S54 has been completed, the procedure returns to step S38 of the call origination processing. By executing the above-mentioned conversion processing, the sequence data of the distribution format consisting of event data and duration data are converted into the sequence data of the tone-generator-unique format consisting of the note data formed by octave data, tone interval data, channel data, interval data, and sounding length data and the rest data formed by channel data and interval data.

If the telephone terminal apparatus according to the present invention described so far has a data transmission capability or a mail transmission capability, the content distribution data downloaded and stored in the RAM 11 can be transferred to another telephone terminal apparatus. In this case, the content distribution data to be transferred are of the distribution format; however, if the content data converted into the tone-generator-unique format are stored in the RAM 11, the content data may be transferred. If only the content data converted into the tone-generator-unique format are stored in the RAM 11, the content data may be converted by the format conversion block 24 into the content distribution format for transfer. The format conversion block 24 may be implemented by the CPU 10 by executing a format conversion program.

In the telephone terminal apparatus according to the present invention, the sound source scheme of the tone generator built in the music reproduction block may be any one of FM sound source, harmonics additive sound source, wavetable memory sound source (PCM sound source), and physical model sound source. The tone generator based on any of these sound source schemes may be implemented by hardware such as DSP or software such as a tone generator program.

In the telephone terminal apparatus according to the present invention based on the above-mentioned various sound source schemes, if the format of sequence data reproducible in the incorporated music reproduction block differs from the distribution format, format conversion is executed so as to provide the sequence data of the format unique to the model. If the sequence data of the distribution format can be reproduced as they are in the music reproduction block, the format conversion need not be executed.

In addition to the above-mentioned data structure of the standardized distribution format, the SMF format known as the distribution format in music reproduction means such as a sequencer may be used.

In the above description, content is a ringing melody. It will be apparent to those skilled in the art that content may be image or voice. Also, in this case, content distribution data of the standardized distribution format are distributed to be converted by the receiving apparatus into the format unique to the model thereof.

Sequence data may include timbre allocation data for specifying a timbre to each part and allocate a timbre to each part in accordance with the timbre allocation data. In this case, a timbre data memory is added to the music reproduction block 15 to set, to the tone generator block 34, the timbre data read by the sequencer 33 from the timbre data memory in accordance with the timbre allocation data. It should be noted that, because the timbre data for obtaining the same timbre differ as the sound source scheme in the tone generator block 34 differs, the timbre data of the timbres corresponding to the sound source schemes of the tone generator block 34 are stored in the timbre data memory beforehand.

### Industrial Applicability

As described and according to the invention, in the distribution of content data, the format of the content data is converted by an apparatus which receives the distributed content data from the standardized general-purpose distribution format into a format unique to the model of the receiving apparatus, thereby allowing to reproduce the downloaded content distribution independently of the model of the apparatus to which the content distribution data have been downloaded. Consequently, a distribution center storing content distribution data need not prepare content data of plural types of formats corresponding to the models of apparatuses to which the content distribution data are downloaded; namely, the distribution center may prepare the content distribution data of only one type of standardized distribution format.

In storing content distribution data, the content distribution data are edited so that the content data converted into the format unique to the model of a receiving apparatus can be reproduced and optimized to the reproduced state. Consequently, when content distribution data, which are music data, are downloaded for reproduction, the content data can be reproduced as a ringing melody of high quality.

## Claims

1. A content data distribution method for distributing, via a communication network, content data from a distribution apparatus to terminal apparatuses of various models which are connectable with said communication network, comprising:
a storage procedure for converting a format of the content data into a standardized format and storing the resultant content data into a storage block of said distribution apparatus;
a distribution procedure for retrieving selected one of the content data from said storage block and distributing the retrieved content data to one of said terminal apparatuses via said communication network;
a reception procedure for receiving the distributed content data at said terminal apparatus; and
a conversion procedure for converting said standardized format of the received content data into a format unique to the model of the receiving terminal apparatus to make said content data reproducible in said receiving terminal apparatus.

2. The content data distribution method according to claim 1, wherein said storage procedure comprises:
a reproduction procedure for re-converting said distribution format of said content data into said format unique to the model of said receiving terminal apparatus for test-reproduction;
an edit procedure for editing the test-reproduced content data so as to optimize the reproduction state thereof; and
a storage procedure for storing the edited content data into said storage block in said standardized distribution format.

3. The content data distribution method according to claim 1, wherein said distribution procedure compresses content data representative of at least one of voice and music by use of one of MP3 and vector quantization, and distributes the compressed content data to said terminal apparatuses.

4. The content data distribution method according to claim 1, wherein each of said terminal apparatuses has a tone generator for generating at least one of voice and music by reproducing said content data representative of at least one of voice and music;
said conversion procedure converting said standardized distribution format of the received content data into a format unique to the model of said tone generator of said terminal apparatus.

5. The content data distribution method according to claim 1, further comprising:
an evaluation procedure for test-reproducing, at said terminal apparatus, said content data with its format converted into a format unique to the model of said terminal apparatus, and evaluating the reproduced state of the received content data.

6. The content data distribution method according to claim 1, wherein said terminal apparatus has at least one of a talk capability and a communication capability and can exchange a message with another terminal apparatus via said communication network; upon reception of a message at said terminal apparatus from another terminal apparatus, said terminal apparatus carrying out a notification procedure for reproducing said content data to provide a notice of the termination of said message.

7. The content data distribution method according to claim 6, wherein, upon reception of said message at said terminal apparatus, said notification procedure reproduces said content data representative of a melody, and sounds said melody for providing a notice of the termination of said message.

8. The content data distribution method according to claim 6, after receiving content data at said terminal apparatus, said method further comprising a transmission procedure for transferring said content data with its format converted into a unique format to another terminal apparatus of the same model as that of said terminal apparatus via said communication network.

9. A content data reproduction method for reproducing, at a terminal apparatus, content data distributed thereto from a distribution apparatus via a communication network, comprising:
a reception procedure for receiving, at said terminal apparatus, said content data with its format converted beforehand into a distribution format standardized at said distribution apparatus;
a conversion procedure for converting the format of the received content data from said standardized format into a format unique to the model of said terminal apparatus; and
a reproduction procedure for processing said content data with its format converted into said unique format to reproduce said content data.

10. The content data reproduction method according to claim 9, wherein said reception procedure receives the content data representative of content constituted by at least one of voice and music compressed by one of MP3 and vector quantization at said distribution apparatus, and then decompresses said compressed content data.

11. The content data reproduction method according to claim 9, wherein said terminal apparatus has a tone generator for processing content data representative of at least one of voice and music to reproduce at least one of voice and music, and
said conversion procedure converts said standardized format of the received content data into a format unique to the model of said tone generator of said terminal apparatus.

12. The content data reproduction method according to claim 9, further comprising:
an evaluation procedure for processing, at said terminal apparatus, said content data with its format converted into the format unique to the model of said terminal apparatus and test-reproducing the processed content data to evaluate the reproduced state of said content data.

13. The content data reproduction method according to claim 9, wherein said terminal apparatus has at least one of a talk capability and a communication capability and can exchange a message with another terminal apparatus via said communication network; upon reception of a message at said terminal apparatus from another terminal apparatus, said terminal apparatus carrying out a notification procedure for reproducing said content data to provide a notice of the termination of said message.

14. The content data reproduction method according to claim 13, wherein, upon reception of said message at said terminal apparatus, said notification procedure reproduces said content data representative of a melody, and sounds said melody for providing a notice of the termination of said message.

15. The content data reproducing method according to claim 13, after receiving content data at said terminal apparatus, said method further comprising a transmission procedure for transferring by said communication capability said content data with its format converted into a unique format to another terminal apparatus of the same model as that of said terminal apparatus via said communication network.

16. A content data distribution system comprising a group of terminal apparatuses of various models which are connectable with a communication network and a distribution apparatus for distributing content data to each of said terminal apparatuses via said communication network:
said distribution apparatus including a conversion block for converting a format of content data into a standardized distribution format, a storage block for storing said content data with its format converted into said standardized distribution formation, and a transmission block for retrieving selected one of the content data from said storage block and distributing the retrieved content data to on of said terminal apparatuses via said communication network; and
said terminal apparatus including a reception block for receiving the distributed content data, a conversion block for converting the format of the received content data from said standardized distribution format into a format unique to the model of said terminal apparatus, and a reproduction block for reproducing the content data having said unique format.

17. The content data distribution system according to claim 16, wherein said distribution apparatus includes a test reproduction block for re-converting the standardized distribution format of said content data into a format unique to the model of said terminal apparatus which is to receive said content data for test-reproduction, and an edit block for editing test-reproduced content data so as to optimize the reproduction state thereof, the edited content data being stored in said storage block in said standardized distribution format.

18. The content data distribution system according to claim 16, wherein said transmission block compresses content data representative of at least one of voice and music by use of one of MP3 and vector quantization, and distributes the compressed content data to said terminal apparatuses.

19. The content data distribution system according to claim 16, wherein said reproduction block has a tone generator for generating at least one of voice and tone by processing said content data representative of at least one of voice and tone; and
said conversion block converts said standardized distribution format of the received content data into a format unique to the model of said tone generator of said terminal apparatus.

20. The content data distribution system according to claim 16, wherein said reproduction block test-reproduces said content data with its format converted into the format unique to the model of said terminal apparatus to enable evaluating of the reproduced state of the received content data.

21. The content data distribution system according to claim 16, wherein said terminal apparatus has at least one of a talk capability and a communication capability and can exchange a message with another terminal apparatus via said communication network; upon reception of a message at said terminal apparatus from another terminal apparatus, said apparatus further comprising a notification block for reproducing said content data to provide a notice of the termination of said message.

22. The content data distribution system according to claim 21, wherein, upon reception of said message at said terminal apparatus, said notification block reproduces said content data representative of a melody, and sounds said melody for notifying said terminal apparatus of the termination of said message.

23. The content data distribution system according to claim 21, wherein said terminal apparatus further comprises a transmission block operative after receiving content data at said terminal apparatus for transferring said content data with its format converted into a unique format to another terminal apparatus of the same model as that of said terminal apparatus via said communication network.

24. A terminal apparatus for receiving content data distributed from a distribution apparatus via a communication network to reproduce the received content data in accordance with the model of said terminal apparatus, comprising:
a reception block for receiving said content data with its format converted beforehand into a distribution format standardized at the distribution apparatus;
a conversion block for converting the format of the received content data from the standardized distribution format into a format unique to the model of said terminal apparatus; and
a reproduction block for processing said content data with its format converted into the unique format to reproduce said content data.

25. The terminal apparatus according to claim 24, wherein said reception block receives content data representative of content constituted by at least one of voice and music compressed by one of MP3 and vector quantization at said distribution apparatus, and then decompresses said compressed content data.

26. The terminal apparatus according to claim 24, wherein said reproduction block has a tone generator for processing content data representative of content constituted by at least one of voice and tone to reproduce one of voice and tone; and
said conversion block converts the format of the received content data from said standardized distribution format into a format unique to the model of said tone generator of said reproduction block.

27. The terminal apparatus according to claim 24, wherein said reproduction block test-reproduces said content data with its format converted into the format unique to the model of said terminal apparatus to enable evaluating of the reproduced state of the received content data.

28. The terminal apparatus according to claim 24, further comprising:
a transmission block which cooperates with said reception block, having at least one of a talk capability and a communication capability for exchanging a message with another terminal apparatus via said communication network; and
a notification block operative upon reception of a message at said reception block from said another terminal apparatus for reproducing said content data to provide a notice of the termination of said message.

29. The terminal apparatus according to claim 28, wherein, upon reception of said message at said reception block, said notification block reproduces content data representative of a melody, and sounds said melody to provide a notice of the termination of said message.

30. The terminal apparatus according to claim 28, wherein said transmission block is capable of transferring the content data with its format converted into said unique format to another terminal apparatus of the same model as that of said terminal apparatus via said communication network.

31. A recording medium storing a program which is executed by a CPU built in a terminal apparatus in order to reproduce content data distributed from a distribution apparatus to said terminal apparatus via a communication network, said program comprising:
a reception step of receiving said content data with its format converted beforehand into a distribution format standardized at said distribution apparatus;
a conversion step of converting the format of the received content data from the standardized distribution formation into a format unique to the model of said terminal apparatus; and
a reproduction step of processing said content data with its format converted into the unique format to reproduce said content data.

32. The recording medium according to claim 31, wherein said reception step receives content data representative of content constituted by at least one of voice and music compressed by one of MP3 and vector quantization at said distribution apparatus, and then decompresses said compressed content data.

33. The recording medium according to claim 31, wherein said terminal apparatus has a tone generator for processing content data representative of at least one of voice and music to reproduce at least one of voice and music and wherein
said conversion step converts said standardized format of the received content data into a format unique to the model of said tone generator of said terminal apparatus.

34. The recording medium according to claim 31, wherein the program further comprises:
an evaluation step of processing, at said terminal apparatus, said content data with its format converted into the format unique to the model of said terminal apparatus, and test-reproducing the processed content data to evaluate the reproduced state of said content data.

35. The recording medium according to claim 31, wherein said terminal apparatus has at least one of a talk capability and a communication capability and can exchange a message with another terminal apparatus via said communication network, and wherein
upon reception of a message at said terminal apparatus from another terminal apparatus, said terminal apparatus carries out a notification step of reproducing said content data to provide a notice of the termination of said message.

36. The recording medium according to claim 31, wherein, upon reception of said message at said terminal apparatus, said notification step reproduces said content data representative of a melody, and sounds said melody for providing a notice of the termination of said message.

37. The recording medium according to claim 35, wherein, after receiving content data at said terminal apparatus, said terminal apparatus further carries out a transmission step of transferring by said communication capability said content data with its format converted into a unique format to another terminal apparatus of the same model as that of said terminal apparatus via said communication network.
